Europäisches Patentamt

European Patent Office

Office européen des brevets

(11) Publication number: **0 134 354**
**B1**

# EUROPEAN PATENT SPECIFICATION

(45) Date of publication of patent specification: **24.08.88**

(21) Application number: **83305128.7**

(22) Date of filing: **05.09.83**

(51) Int. Cl.⁴: $C\ 02\ F\ 11/06$, $B\ 09\ B\ 3/00$, $F\ 26\ B\ 17/22$

(54) Method and apparatus for treating polychlorinated biphenyl contaminated sludge.

(43) Date of publication of application:
**20.03.85 Bulletin 85/12**

(45) Publication of the grant of the patent:
**24.08.88 Bulletin 88/34**

(84) Designated Contracting States:
**AT BE CH DE FR GB IT LI LU NL SE**

(56) References cited:
**DE-C- 501 830**
**FR-A-2 466 439**
**US-A-4 140 066**
**US-A-4 245 570**
**US-A-4 273 527**

(73) Proprietor: **Meenan, William C.**
**330 Douglas Avenue**
**Waukegan Lake Illinois 60085 (US)**

(73) Proprietor: **Sullivan, George D.**
**1043 Old Elm Lane**
**Glencoe Cook Illinois 60022 (US)**

(72) Inventor: **Meenan, William C.**
**330 Douglas Avenue**
**Waukegan Lake Illinois 60085 (US)**
Inventor: **Sullivan, George D.**
**1043 Old Elm Lane**
**Glencoe Cook Illinois 60022 (US)**

(74) Representative: **Abbie, Andrew Kenneth et al**
**A.A. THORNTON & CO. Northumberland House**
**303/306 High Holborn**
**London, WC1V 7LE (GB)**

Courier Press, Leamington Spa, England.

## Description

This invention relates generally to methods and apparatus for treating polychlorinated biphenyl contaminated sludge, such as the sand, mud, or the like, forming the bottoms of PCB contaminated lakes and streams.

Since 1978 the manufacture of polychlorinated biphenyls (PCBs) has been banned in the United States. These chemicals have been widely used in the past in transformers, carbonless carbon paper, hydraulic pumps, caulking compounds, inks, paints and insect sprays. A tremendous amount of these chemicals, suspected of causing cancer and birth defects, have been dumped over a number of years in an entirely reckless fashion. Commonly these chemicals were dumped in lakes, streams and waterways where they eventually collected in the bottom material in considerable concentrations.

Because of the method of dumping these chemicals, a tremendous mass of material has been contaminated with these chemicals. In the past, bottom soils or the like contaminated with these fluids have been treated by attempting to burn or by burying them. Because of the nature of the materials in which the PCB contamination is often found, burning is extremely difficult and burying is often only a stop gap measure.

It has been recognized that thermal decomposition of polychlorinated organic compounds is possible despite the very high degree of thermal stability of these compounds. U.S. Patent 4,140,066 discloses a method of decomposing PCB's by exposure to heat in a combustion chamber which operates with extremely intense turbulence and pulsation under temperatures as low as 850°C. and with residence times as short as .1 second. However, the patent provides no method or apparatus for dealing with the problem of the treatment of mountainous amounts of contaminated, wet material having a relatively low heating value. Thus while the method set forth in the '066 patent may be highly useful in eliminating PCB containing compounds in relatively small volumes, the process is not particularly helpful in dealing with contaminations on the order of tons in the form of residues in sludge.

A variety of techniques for incinerating waste material are known. The following U.S. patents are exemplary: 4,245,570; 3,858,534; 3,829,558; 3,812,794; 3,716,339; and 3,511,194.

It is a primary object of the present invention to provide an apparatus capable of separating PCB's from an extremely large quantity of sludge.

It is also an object of the present invention to provide a method and apparatus for treating contaminated river, lake, and waterway bottom material in an efficient and economical way.

According to the present invention there is provided a method of separating polychlorinated biphenyls from PCB contaminated sludge, such as waterway bottom material, characterised in that it comprises heating said material by exposure to hot gas at a temperature of from 850°F (454.4°C) to 2,500°F (1371°C) in a heating means thereby separating the polychlorinated biphenyls from the material, and conveying said separated polychlorinated biphenyls entrained in the gaseous phase out of said heating means for further treatment.

The method separates the water and polychlorinated biphenyls from the sludge and leaves a dry particulate mass. The PCB material is formed into a gas stream and prepared for burning.

In accordance with another embodiment of the present invention there is provided an apparatus for treating polychlorinated biphenyl contaminated sludge characterised in that it comprises: a separator vessel having inlet means at its bottom for entrance of hot air; exit port means near a top thereof for exit of gases and fine, dry particulate matter entrained in the exit gas; a rotating blade disposed in an upper portion of the separator vessel adapted to permit fine particulate matter to pass through the blade and exit the separator through the exit port means, and to return the larger particles downwardly for further treatment; second separator means in fluid communication with the separator exit port means for separating the entrained fine particulate material from the gases exiting the separator; second exit port means near the bottom of the separator vessel for the exit of treated, dry sludge; and means for recirculating at least a portion of the treated, dry sludge back to the separator vessel for further treatment so that the completed sludge has 1% by weight or less of the PCB's left therein.

In the drawings:

Figure 1 is a schematic layout of the apparatus in accordance with one embodiment of the present invention;

Figure 2 is an enlarged cross-sectional view taken generally along the line 2—2 in Figure 1; and

Figure 3 is an enlarged, partial, cross-sectional view taken generally along the line 3—3 in Figure 1.

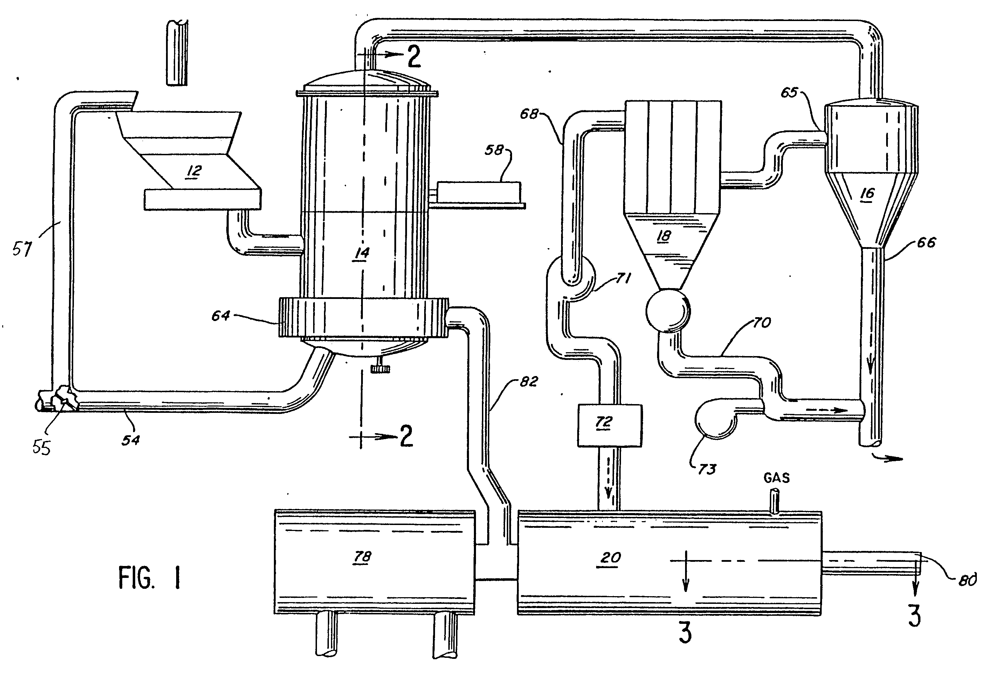

Referring to the drawing wherein like reference characters are used for like parts throughout the several views, a PCB contaminated sludge treating apparatus, shown in Fig. 1, includes a mixer 12, a separator 14, a cyclone separator 16, a bag collector 18, and a furnace 20. Wet or dry sludge contaminated with PCB's is poured into the apparatus through the mixer 12. The nature of the sludge is not critical, and the device is adapted to operate with sand, mud, sewage, organic matter, effluvia and the like, conveniently in the form of bottom dredgings.

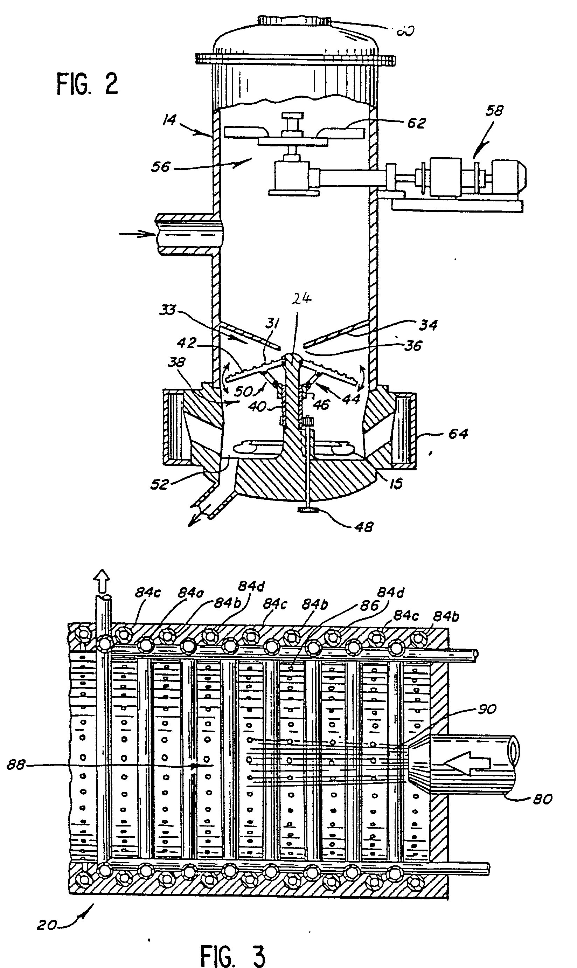

The mixer 12 is conveniently a conventional mixer/feeder with a screw feeding mechanism (not shown) arranged generally horizontally within the mixer 12. As the sludge is poured into the mixer 12, it is thoroughly mixed and forwarded into the PCB separator 14. As shown in Fig. 2, the sludge may be poured in a wet state (including for example 20% solids) into the separator 14 and quickly dried. Very hot air is blown inwardly from the bottom of the separator 14 through a wind box 64 and allowed to move upwardly through the device, drying the sludge with the hot turbulent air. In addition a burner 15 is provided at the bottom of the separator 14. The air in the separator 14 may be at a temperature of from 850°F. to 2,500°F. (454.4 to 1371°C.); however, to achieve the full advantages of the present invention an operating range of from 1400°F. to 2,000°F. (760 to 1093.3°C.) is utilized.

The larger particulate material falls downwardly through the separator 14 at a rate controlled by the delaying apparatus 33. The apparatus 33 includes a first frusto-conical surface 34 angled downwardly so as to direct the particulate matter to a central position adjacent the shaft 24. The particulate matter falls through the aperture 36 onto the umbrella 38, including a plurality of side by side arms 42. The umbrella 38 is generally frustoconical in shape but is directed upwardly so as to receive the particulate matter and to redirect it outwardly towards the periphery of the separator 14. The arms 42 of the frusto-conical umbrella 38 are hingedly secured at their upper ends to a tube 40 surrounding the shaft 24. An umbrella angle adjusting mechanism 44 includes a tube 46 which freely encircles the tube 40 and is arranged for vertical adjustment using a handle 48. A plurality of links 50, connecting the tube 46 to the arms 42 of the umbrella 38, are hingedly connected to both the tube 46 and the arms 42 to permit the angle of the arms 42 to be adjusted, as indicated by the arrows in Fig. 2. The upper surface of each arm 42 includes a plurality of ridges 31 which control the rate of movement of the particulate matter along the surface of the arms 42.

Eventually the particulate matter tumbles off of the edges of the umbrella 38 and collects at the bottom of the separator 14, eventually flowing outwardly thereof through the opening 52. From the opening 52 any particulate matter that contains an excessive PCB concentration is returned by way of the conveyor channel 54 through the action of the diverter valve 55 to the mixer 12. The mixer 12 mixes the dried coarse particulate matter with the incoming wet sludge and feeds the mixture to the separator 14. The adequately treated sludge is returned to its source by way of passage 57.

In the separator 14 the finer, dry particulate matter is propelled upwardly through the spinning product separator 56. The separator 56, rotated in the upper portion of the separator 14 by a motor 58, includes at least two blades 62. The fine particulate matter, entrained in the gas flow out of the separator 14, is propelled upwardly out of the separator 14 through the passage 60. The larger particles are returned to the separator 14 by the product separator 56.

The fine particulates and air entrained PCB material exiting from the separator 14 are conveyed to the conventional cyclone separator 16 which separates the fine particulates from the gas entraining those particulates. The gas exits from the cyclone separator 16 through the opening 65 while the particulates move downwardly through the exit 66. The gas proceeding through the opening 65 passes to a conventional bag collector 18 that removes any remaining particulates in a more thorough fashion. The remaining gas is expelled through the passage 68 while any newly recovered particulates fall downwardly through the passage 70 to join the particulates collected by the cyclone separator 16. The PCB effluvia is then fed to a furnace 20, while particulates are tested for PCB concentration and, if a safe PCB level exists, they are dumped. A charcoal filter 72 is arranged in the passage 68 to provide a final particulate cleaning step.

The gas flow through the entire system is responsive to action of the blower 71 while the movement of the separated particles is responsive to the blower 73. The blower 71 is powerful enough to maintain a vacuum within the separator 14, and is conveniently capable of moving about 13,500 SCFM of hot air.

A suitable multiple fuel burning apparatus for use as the furnace 20 herein is described in U.S. patents 4,273,527 and 3,174,530 both to Cyril F. Meenan. The furnace 20 is capable of burning unconventional fuels of very low heating value, at very high temperatures, for example from 3,500 to 5,000°F. (1926.6 to 2760°C.).

As shown in Fig. 3, the furnace 20 includes a plurality of side by side concentric pipes 84, the pipes 84a conveying water, the pipes 84b conveying pressurized air and/or $O_2$ enriched air, the pipes 84c conveying a pressurized combustible fuel gas such as natural gas or natural gas premixed with $O_2$, and the pipes 84d conveying the PCB effluvia in the form of PCBs entrained in gas. The air in the pipes 84b is conveniently ambient air and/or $O_2$ enriched air. The pipes 84b, 84c, and 84d include a plurality of nozzles 86 arranged to direct the gas flow out of the pipes radially inwardly in a circumferential fashion to the center of the generally tubular combustion chamber 88. Thus, air, natural gas and effluvia are progressively mixed along the length of the axially directed burner flame, emanating from the burner 80, conveniently a natural gas burner, indicated as 90 in Fig. 3. The transversely or radially injected air and gas mix with the axially applied burner flame resulting in very thorough and complete combustion of the PCB's. The water circulating through the pipes 84a is heated in the process and may be used in the boiler 78 to produce superheated water or steam. A portion of the hot flue gases are conducted to the boiler 78 for this purpose. The hot water or steam produced by the boiler 78 is used for operating power generating turbines in a conventional fashion. A portion of the hot combustion gases from the interior of the combustion chamber 88 may also be conducted, by way of the passage 82, to the interior of the separator 14 where they operate to dry the incoming sludge.

Before any flue gases are released to the environment from the boiler 78, they are treated by an emissions control device. The device, of conventional form, includes chemical scrubbers and/or electrostatic precipitators that remove any hazardous wastes.

The present device has been found to be highly effective in separating PCB's from sludge in the separator 14 and in subsequently destroying the PCB's such that one percent or less of the PCB's remain after final processing. Since all the exhausts from each step in the operation of the apparatus are controlled, these exhausts may be recycled if it is found that their PCB concentration is too high.

The residence time of the sludge within the separator 14 may be controlled by adjusting the angle of the umbrella 38 to control the rate of exhaust to the large particulate matter from the separator 14. To achieve the full advantages of the present invention a residence time of the sludge within the separator 14 on the order of .5 to 2 seconds is used. A highly advantageous arrangement utilizes air within the separator 14 at 1800°F. (982.2°C.) with a residence time of the particulate matter within the roller mill/separator of about .5 seconds. At a temperature of 850°F. (454.4°C.) within the separator 14, a residence time of about 10 seconds is required. The apparatus is capable of processing on the order of 10,000 pounds (4535.9 kg) of sludge per hour.

**Claims**

1. A method of separating polychlorinated biphenyls from PCB contaminated sludge, such as waterway bottom material, characterised in that it comprises heating said material by exposure to hot gas at a temperature of from 850°F (454.4°C) to 2,500°F (1371°C) in a heating means thereby separating the polychlorinated biphenyls from the material, and conveying said separated polychlorinated biphenyls entrained in the gaseous phase out of said heating means for further treatment.

2. A method as claimed in claim 1, further characterised by forming a fluidized stream of fine particulates and gaseously entrained PCB material; and separating the gaseously entrained PCB material from the fine particulates.

3. A method as claimed in either claim 1 or claim 2, characterised by exposing said material to said hot gas for a period of time sufficient to leave 1% or less of the polychlorinated biphenyls in the material.

4. A method as claimed in claim 3, characterised in that the period of time is .5 to 10 seconds.

5. A method as claimed in any one of the preceding claims, characterised in that the material is contacted with hot turbulent air at a temperature of 1400°F (760°C) to 2000°F (1093.3°C).

6. A method as claimed in any one of the preceding claims, characterised by directing the material into the heating means and onto a first drying surface disposed within said heating means, said first surface angled downwardly from a periphery of the heating means towards a longitudinal center of the heating means for directing the material into a position at the longitudinal center of the heating means for contact with the hot turbulent gas and vaporization of the polychlorinated biphenyls; and dropping the material from said first surface onto a lower, second drying surface disposed within said heating means, said second surface angled downwardly from the longitudinal center of the heating means towards the periphery of the heating means for directing the material toward the periphery of the heating means, while vaporizing the polychlorinated biphenyls from the material.

7. A method as claimed in claim 6, characterised in that said first and second drying surfaces are frusto-conically shaped.

8. A method as claimed in any one of the preceding claims, characterised by the step of burning the separated polychlorinated binyls.

9. A method as claimed in claim 8, characterised in that said polychlorinated biphenyls are burned by transversely injecting the PCB containing gas phase into a burner flame at spaced points along the length of the flame.

10. A method as claimed in either claim 8 or claim 9, characterised by the step of mixing the PCB containing phase with fossil fuel during burning.

11. A method as claimed in claim 10, characterised by the steps of adding combustible fuel gas and air at spaced points along the length of the burner flame in a direction generally transverse to the flame length.

12. An apparatus for treating polychlorinated biphenyl contaminated sludge characterised in that it comprises: a separator vessel (14) having inlet means (64) at its bottom for entrance of hot air; exit port means (60) near a top thereof for exit of gases and fine, dry particulate matter entrained in the exit gas; a rotating blade (62) disposed in an upper portion of the separator vessel (14) adapted to permit fine particulate matter to pass through the blade (62) and exit the separator through the exit port means (60), and to return the larger particles downwardly for further treatment; second separator means (16) in fluid communication with the separator exit port means (60) for separating the entrained fine particulate material from the gases exiting the separator; second exit port means (52) near the bottom of the separator vessel for the exit of treated, dry sludge; and means (54) for recirculating at least a portion of the treated, dry sludge back to the separator vessel for further treatment so that the completed sludge has 1% by weight or less of the PCB's left therein.

13. An apparatus as claimed in claim 12, characterised in that said separator (14) comprises baffle means (34, 42) to allow exposure of the sludge to a hot gas stream for a period of time sufficient to vaporize a substantial portion of the polychlorinated biphenyls from the sludge.

14. An apparatus as claimed in claim 13, characterised in that the baffle means comprises an internal first sludge-hot gas contacting surface (34) angled downwardly from a periphery of the separator towards a longitudinal centre of the separator for directing the sludge toward the longitudinal centre of the separator for contact with the hot gas and vaporization of the polychlorinated biphenyls; and a second, lower, internal sludge-hot gas contact surface (42) angled downwardly from the longitudinal centre of the separator towards the periphery of the separator for directing the sludge toward the periphery of the separator, while vaporizing the polychlorinated biphenyls from the sludge.

15. An apparatus as claimed in any one of claims 12 to 14, further characterised by means (20) for further treating vaporized water from the sludge and polychlorinated biphenyls.

16. An apparatus as claimed in claim 15, characterised by means for burning said separated PCB's, said burner means (20) including means (84b) for injecting air transversely into a burner flame at spaced points along the length of the burner.

**Patentansprüche**

1. Verfahren zur Abtrennung polychlorierter Biphenyle aus PCB-verunreinigtem Schlamm wie Material auf dem Grund von Gewässern, dadurch gekennzeichnet, dass es darin besteht, dieses Material durch Einwirkung heissen Gases bei einer Temperatur von 850°F (454,4°C) bis 2500°F (1371°C) in einer Heizvorrichtung zu erhitzen und dadurch die polychlorierten Biphenyle vom Material abzutrennen sowie diese abgetrennten, in der Gasphase mitgeschleppten polychlorierten Biphenyle aus dieser Heizvorrichtung zu weiterer Behandlung zu fördern.

2. Verfahren nach Anspruch 1, gekennzeichnet ferner durch die Bildung eines Wirbelstroms aus feinen Teilchen und gasförmig mitgeschlepptem PCB-Material und dessen Abtrennung von den feinen Teilchen.

3. Verfahren nach Anspruch 1 oder 2, dadurch gekennzeichnet, dass man besagtes heisses Gas genügend lange auf dieses Material einwirken lässt, damit 1% oder weniger der polychlorierten Biphenyle im Material verbleibt.

4. Verfahren nach Anspruch 3, dadurch gekennzeichnet, dass der Zeitraum 0,5 bis 10 Sekunden beträgt.

5. Verfahren nach einem der vorhergehenden Ansprüche, dadurch gekennzeichnet, dass man das Material mit heisser verwirbelter Luft einer Temperatur von 1400°F (760°C) bis 2000°F (1093,3°C) in Berührung bringt.

6. Verfahren nach einem der vorhergehenden Ansprüche, dadurch gekennzeichnet, dass man das Material in die Heizvorrichtung und auf eine darin angeordnete erste Trocknungsfläche leitet, welche vom Umfang der Heizvorrichtung nach unten zum Längsmittelpunkt der Heizvorrichtung geneigt ist, um das Material zur Berührung mit dem heissen verwirbelten Gas und zur Verdampfung der polychlorierten Biphenyle an eine Stelle im Längsmittelpunkt der Heizvorrichtung zu bringen, und das Material von jener ersten Fläche auf eine niedrigere zweite, in dieser Heizvorrichtung angeordnete Trocknungsfläche fallen lässt, welche vom Längsmittelpunkt der Heizvorrichtung zu deren Umfang hin nach unten geneigt ist, um das Material dort hinzuleiten, während die polychlorierten Biphenyle aus dem Material verdampfen.

7. Verfahren nach Anspruch 6, dadurch gekennzeichnet, dass diese ersten und zweiten Trocknungsflächen kegelstumpfförmig sind.

8. Verfahren nach einem der vorhergehenden Ansprüche, dadurch gekennzeichnet, dass die abgetrennten polychlorierten Biphenyle verbrannt werden.

9. Verfahren nach Anspruch 8, dadurch gekennzeichnet, dass diese polychlorierten Biphenyle durch Quereinblasen der PCB-haltigen Gasphase in eine Brennerflamme an beabstandeten Stellen entlang der Länge der Flamme verbrannt werden.

10. Verfahren nach Anspruch 8 oder 9, dadurch gekennzeichnet, dass die PCB-haltige Phase während der Verbrennung mit fossilem Brennstoff vermischt wird.

11. Verfahren nach Anspruch 10, dadurch gekennzeichnet, dass man brennbares Heizgas und Luft an beabstandeten Stellen entlang der Länge der Brennerflamme allgemein in einer Richtung quer zur Flammenlänge zusetzt.

12. Vorrichtung zur Behandlung von mit polychloriertem Biphenyl verunreinigtem Schlamm, dadurch gekennzeichnet, dass sie besteht aus: einem Trenngefäss (14) mit einer Zufuhreinrichtung (64) an seinem Boden zum Eintritt heisser Luft, Auslassöffnungen (16) nahe seinem Oberende zur Abführ von Gasen und feinem, trockenem, im Abgas mitgeschlepptem Teilchenmaterial, einem rotierenden, in einem Oberteil des Trenngefässes (14) angeordneten Flügel (62), welcher so konstruiert ist, dass feines Teilchenmaterial durch diesen hindurchtritt und das Trenngefäss durch die Auslassöffnungen (60) verlässt und die grösseren Teilchen zur weiteren Behandlung nach unten strömen, einer zweiten Trennvorrichtung (16) in Strömungsverbindung mit den Trenngefässauslässöffnungen (60) zur Abtrennung mitgeschleppten feinen Teilchenmaterials von den das Trenngefäss verlassenden Gasen, zweiten Auslassöffnungen (52) nahe am Boden des Trenngefässes zur Abfuhr behandelten, trockenen Schlammes sowie Mitteln (54) zur mindestens teilweisen Rückführung des behandelten, trockenen Schlammes in das Trenngefäss zu weiterer Behandlung, damit 1 Gew.-% oder weniger der PCBs im fertigen Schlamm verbleibt.

13. Vorrichtung nach Anspruch 12, dadurch gekennzeichnet, dass dieses Trenngefäss (14) Leitvorrichtungen (34, 42) enthält, um die Einwirkung eines heissen Gasstroms auf den Schlamm für einen genügend langen Zeitraum zu ermöglichen, um einen erheblichen Teil der polychlorierten Biphenyle aus dem Schlamm zu verdampfen.

14. Vorrichtung nach Anspruch 13, dadurch gekennzeichnet, dass die Leitvorrichtung aus

5

einer inneren ersten, vom Umfang des Trenngefässes nach unten zu dessen Längsmittelpunkt hin geneigten Schlamm-Heissgasberührungsfläche (34), um den Schlamm zur Berührung mit dem heissen Gas und zur Verdampfung der polychlorierten Biphenyle zum Längsmittelpunkt des Trenngefässes zu leiten, und einer inneren, niedrigeren zweiten, vom Längsmittelpunkt des Trenngefässes nach unten zu dessen Umfang hin geneigten Schlamm-Heissgasberührungsfläche (42), um den Schlamm zum Umfang des Trenngefässes zu leiten, während die polychlorierten Biphenyle aus dem Schlamm verdampfen, besteht.

15. Vorrichtung nach einem der Ansprüche 12 bis 14, gekennzeichnet ferner durch Einrichtungen (20) zur weiteren Behandlung von aus dem Schlamm verdampftem Wasser und polychlorierten Biphenylen.

16. Vorrichtung nach Anspruch 15, gekennzeichnet durch Einrichtungen zum Verbrennen dieser abgetrennten PCBs, wobei diese Brennereinrichtungen (20) Mittel (84b) zum Einblasen von Luft quer in die Brennerflamme an beabstandeten Stellen entlang der Brennerlänge enthalten.

**Revendications**

1. Un procédé de séparation des biphényles polychlorés de boues contaminées par des PCB, telles que le matériau du fond des voies d'eau, caractérisé en ce qu'il comprend le chauffage dudit matériau par exposition à un gaz chaud à une température comprise entre 454,4°C (850°F) et 1371°C (2500°F) dans un moyen de chauffage, en séparant par là les biphényles polychlorés du matériau, et le transport desdits biphényles polychlorés séparés, entraînés dans la phase gazeuse, en-dehors dudit moyen de chauffage en vue d'un traitement ultérieur.

2. Un procédé selon la revendication 1, caractérisé en outre par la formation d'un courant fluidisé de particules fines et de matériau PCB entraîné par le gaz; et la séparation du matériau PCB entraîné par le gaz et des particules fines.

3. Un procédé selon l'une ou l'autre de la revendication 1 ou de la revendication 2, caractérisé par l'exposition dudit matériau audit gaz chaud pendant une période de temps suffisante pour laisser 1% ou moins de biphényles polychlorés dans le matériau.

4. Un procédé selon la revendication 3, caractérisé en ce que la période de temps est comprise entre 0,5 et 10 secondes.

5. Un procédé selon l'une quelconque des revendications précédentes, caractérisé en ce que le matériau est mis en contact avec de l'air turbulent chaud à une température comprise entre 760°C (1400°F) et 1093,3°C (2000°F).

6. Un procédé selon l'une quelconque des revendications précédentes, caractérisé par l'envoi du matériau dans le moyen de chauffage et sur une première surface de séchage, disposée à l'intérieur dudit moyen de chauffage, ladite première surface étant à un angle vers le bas à partir d'une périphérie du moyen de chauffage en direction d'un centre longitudinal du moyen de chauffage, pour diriger le matériau vers une position au centre longitudinal du moyen de chauffage en vue d'un contact avec le gaz turbulent chaud et d'une vaporisation des biphényles polychlorés. Et la chute du matériau à partir de ladite première surface sur une seconde surface de séchage plus basse, disposée à l'intérieur dudit moyen de chauffage, ladite seconde surface étant à un angle vers le bas à partir du centre longitudinal du moyen de chauffage, vers la périphérie du moyen de chauffage pour diriger le matériau vers la périphérie du moyen de chauffage, tout en vaporisant les biphényles polychlorés à partir du matériau.

7. Un procédé selon la revendication 6, caractérisé en ce que lesdites première et seconde phases de séchage sont de forme tronconique.

8. Un procédé selon l'une quelconque des revendications précédentes, caractérisé par l'étape de combustion des biphényles polychorés séparés.

9. Un procédé selon la revendication 8, caractérisé en ce que lesdits biphényles polychlorés sont brûlés en injectant transversalement la phase gazeuse contenant les PCB dans une flamme de brûleur, à des points espacés sur toute la longueur de la flamme.

10. Un procédé selon l'une ou l'autre de la revendication 8 ou de la revendication 9, caractérisé par l'étape de mélange de la phase contenant les PCB avec du combustible fossile pendant la combustion.

11. Un procédé selon la revendication 10, caractérisé par les étapes d'addition de gaz combustible pouvant brûler et d'air, à des points espacés sur toute la longueur de la flamme du brûleur, dans une direction qui est en général transversale par rapport à la longueur de la flamme.

12. Un appareil pour traiter les boues contaminées par des biphényles polychlorés, caractérisé en ce qu'il comprend un récipient de séparation (14) ayant un moyen d'entrée (64) à sa base pour l'entrée de l'air chaud, un moyen d'orifice de sortie (60) près d'un sommet de celui-ci pour la sortie des gaz et de la matière particulaire fine et sèche entraînée dans le gaz de sortie; une lame rotative (62) disposée dans une partie supérieure du récipient de séparation (14) adaptée pour permettre à la matière particulaire fine de passer à travers la lame (62) et de sortir du séparateur à travers le moyen d'orifice de sortie (60), et pour renvoyer les particules plus grandes vers le bas en vue d'un traitement ultérieur; un second moyen de séparation (16) en communication fluide avec le moyen d'orifice de sortie du séparateur (60) pour séparer la matière particulaire fine entraînée des gaz qui sortent du séparateur; un second moyen d'orifice de sortie (52) près de la base du récipient de séparation pour la sortie de la boue sèche traitée et un moyen (54) pour faire recirculer au moins une partie de la boue sèche traitée, en retour vers le moyen de séparation, en vue d'un traitement ultérieur, de manière que la boue complètement traitée ne contienne que 1% ou moins en poids de PCB résiduels à l'intérieur.

13. Un appareil selon la revendication 12, caractérisé en ce que ledit séparateur (14) comprend des moyens de chicane (34, 42) pour permettre l'exposition de la boue à un courant de gaz chaud pendant une période de temps suffisante pour vaporiser une partie substantielle des biphényles polychlorés à partir de la boue.

14. Un appareil selon la revendication 13, caractérisé en ce que les moyens de chicane comprennent une première surface interne de mise en contact de la boue et du gaz chaud (34) à un angle vers le bas à partir d'une périphérie du séparateur en direction d'un centre longitudinal du séparateur, pour diriger la boue vers le centre longitudinal du séparateur, en vue d'un contact avec le gaz chaud et d'une vaporisation des biphényles polychlorés, et une seconde surface interne plus basse de mise en contact de la boue et du gaz chaud (42) à un angle vers le bas à partir du centre longitudinal du séparateur en direction de la périphérie du séparateur pour diriger la boue vers la périphérie du séparateur, tout en vaporisant les biphényles polychlorés à partir de la boue.

15. Un appareil selon l'une quelconque des revendications 12 à 14, caractérisé en outre par un moyen (20) pour traiter encore plus l'eau vaporisée à partir de la boue et les biphényles polychlorés.

16. Un appareil selon la revendication 15, caractérisé par un moyen pour brûler lesdits PCB séparés, ledit moyen de brûleur (20) comprenant un moyen (84b) pour injecter de l'air en direction transversale dans une flamme de brûleur, à des points espacés sur toute la longueur du brûleur.

FIG. 1

0 134 354

FIG. 2

FIG. 3